# FASCICULE DE BREVET EUROPEEN

(11) **EP 3 856 583 B1**
(45) Date de publication et mention de la délivrance du brevet: **26.06.2024**
(21) Numéro de dépôt: 19768836.9
(22) Date de dépôt: 18.09.2019
(51) Int. Cl.: B60S 1/38, B60S 1/52

(54) **BALAI D'ESSUIE-GLACE À PROJECTION DE LIQUIDE POUR VITRE DE VÉHICULE AUTOMOBILE, ET PERFECTIONNENT DE L 'ÉTANCHÉITÉ DE CE BALAI**
FLÜSSIGKEITSSPRÜHENDER SCHEIBENWISCHERRAHMEN FÜR KRAFTFAHRZEUGFENSTER UND OPTIMIERUNG DER ABDICHTUNG DIESES RAHMENS
LIQUID SPRAYING WIPER FRAME FOR MOTOR VEHICLE WINDOWS, AND OPTIMISATION OF THE SEALING OF THIS FRAME

(30) Priorité: 28.09.2018 FR 1858994
(43) Date de publication de la demande: 04.08.2021
(73) Titulaire: Valeo Systèmes d'Essuyage, 78322 Le Mesnil Saint Denis (FR)
(72) Inventeur: CAILLOT, Gérald, 78322 LE MESNIL SAINT DENIS (FR); CHASSAING, Christophe, 63500 ISSOIRE (FR); JARASSON, Jean-Michel, 78322 LE MESNIL SAINT DENIS (FR); SEVELLEC, Pierre, 63500 ISSOIRE (FR); THEBAULT, Denis, 63500 ISSOIRE (FR)
(74) Mandataire: Valeo Visibility
(86) Numéro de dépôt international: PCT/EP2019/074931
(87) Numéro de publication internationale: WO 2020/064445

(56) Documents cités:
- WO-A1-2009/130183
- DE-A1-102012 100 777
- US-A1- 2014 090 200
- US-A1- 2015 040 337

## Description

### DOMAINE TECHNIQUE DE L'INVENTION

L'invention concerne un balai d'essuie-glace, aussi appelé balai d'essuyage, notamment pour l'essuyage de la surface extérieure d'une vitre de véhicule automobile, qui est associé à des moyens de distribution et/ou de projection d'un liquide sur la surface à essuyer.

### ARRIERE PLAN TECHNIQUE DE L'INVENTION

L'invention concerne plus particulièrement un balai d'essuie-glace comprenant un dispositif de distribution et/ou de projection de liquide comportant au moins un canal de circulation de liquide.

Un véhicule automobile est classiquement équipé d'essuie-glaces, notamment pour assurer un lavage de la surface extérieure du pare-brise et éviter ainsi que la vision qu'a le conducteur de son environnement ne soit perturbée.

Un essuie-glace comprend en général un bras d'entraînement (aussi appelé bras d'essuie-glace ou porte-balai), effectuant un mouvement de va-et-vient, notamment angulaire, et un balai d'essuie-glace allongé longitudinalement qui porte une lame d'essuyage ou lame racleuse réalisée en une matière élastique telle que du caoutchouc ou un matériau élastomère.

La lame d'essuyage frotte contre la surface extérieure du pare-brise et évacue l'eau en l'amenant en dehors du champ de vision du conducteur.

Dans une version classique, le balai d'essuie-glace est réalisé sous la forme d'étriers articulés qui tiennent la lame racleuse d'essuyage en plusieurs endroits discrets répartis longitudinalement en lui conférant un cintrage lui permettant d'épouser l'éventuelle courbure ou galbe du pare-brise.

Dans une version plus récente dénommée "Flat Blade" (pour "Balai Plat"), le balai d'essuie-glace est réalisé sous la forme d'un ensemble semi-rigide qui maintient la lame d'essuyage sur toute sa longueur grâce à une ou des vertèbres de cintrage permettant d'appliquer le balai et la lame d'essuyage sur le pare-brise sans avoir à utiliser d'étriers.

Une telle conception consiste en une structure construite autour d'au moins une pièce longitudinale monobloc constituée de deux parties fonctionnellement distinctes. Une première partie est un support en matériau plastique semi-rigide comportant, d'une part, une cavité dans laquelle est logée une tige de rigidification, aussi appelée vertèbre et d'autre part une griffe portant la lame d'essuyage en matériau élastomère ou en caoutchouc.

Une deuxième partie de la pièce longitudinale monobloc est un accessoire destiné à améliorer l'efficacité et la qualité de l'essuyage.

Un accessoire ou composant d'un dispositif de distribution/projection d'un liquide de lavage approprié qui permet, par action conjuguée avec le mouvement de balayage de la lame d'essuyage, d'éliminer certaines particules solides pouvant se fixer sur les vitres, peut comporter au moins un canal de circulation ou transport de liquide muni de trous latéraux à travers lesquels le liquide de lavage est projeté contre la surface de la vitre à essuyer.

Comme cela est par exemple enseigné par le document FR-A1-2.920.729, le dispositif de distribution/projection de liquide est combiné avec un déflecteur aérodynamique qui utilise le vent relatif du véhicule pour augmenter la force de contact de la lame d'essuyage contre la vitre à essuyer.

La pièce longitudinale complexe intégrant les fonctions de support et au moins de dispositif de distribution/projection de liquide peut être obtenue par co-extrusion d'au moins deux matériaux. Un premier matériau est un matériau plastique semi-rigide présentant une flexibilité longitudinale, destiné à réaliser la fonction de support proprement dite, tandis qu'au moins un autre matériau, comme un élastomère, est utilisé pour réaliser au moins la fonction de projection de liquide.

Ce même document propose un balai d'essuie-glace qui comprend au moins un embout qui est agencé à une extrémité longitudinale de la structure et qui comporte des moyens d'obturation du canal de circulation du liquide.

Les moyens d'obturation intégrés à l'embout d'extrémité permettent de mettre sous pression le liquide contenu dans le canal de circulation de façon à forcer le passage du liquide à travers les trous latéraux du canal d'arrosage ou d'aspersion de la surface vitrée à essuyer.

Le canal de transport peut être co-extrudé avec le support longitudinal du balai d'essuie-glace ou constituer des pièces séparées qui sont fixées directement sur le support par divers moyens comme par emboîtement élastique, assemblage en queue d'aronde, etc.

Le au moins un canal de circulation de liquide peut aussi être intégré à la lame d'essuyage, ou encore il peut être combiné à un déflecteur aérodynamique du balai d'essuyage.

Comme illustré dans le document FR-A1-2.920.729, le canal de circulation de liquide est réalisé à l'intérieur d'un profilé constituant le déflecteur aérodynamique, avec l'avantage d'un encombrement minimum pour le dispositif de distribution/projection qui se trouve alors intégré à la conception du déflecteur.

Comme cela est illustré aux figures 4a et 5a de ce document, les moyens d'obturation intégrés à l'embout comportent une tige dont l'extrémité libre est conformée en un bouchon d'obturation qui est apte à être inséré à l'intérieur du canal de transport de liquide. WO-A-2009/130183 montre le préambule de la revendication 1.

L'invention vise à améliorer la qualité et l'étanchéité de l'obturation du canal de circulation de liquide.

### BREF RESUME DE L'INVENTION

L'invention propose un balai d'essuie-glace selon la revendication 1.
Selon d'autres caractéristiques du balai d'essuie-glace :
- le bouchon d'obturation comporte au moins un corps d'obturation dont la section transversale est conjuguée de celle du tronçon d'extrémité libre dudit canal ;
- le bouchon comporte un corps d'obturation de révolution, et la section transversale du tronçon d'extrémité longitudinale du canal de circulation de liquide est circulaire ;
- le corps d'obturation du bouchon d'obturation est un corps sphérique ;
- le corps d'obturation du bouchon d'obturation est un tronçon de sphère, de cône, ou de cylindre ;
- le bouchon d'obturation comporte une queue d'insertion qui prolonge axialement le corps d'obturation, en direction de ladite face d'extrémité du dispositif ;
- le bouchon d'obturation de ladite extrémité du canal de circulation de liquide est inséré axialement à l'intérieur dudit tronçon d'extrémité longitudinale dudit canal ;
- la tige est fixée à l'intérieur dudit tronçon d'extrémité longitudinale du canal de circulation de liquide, par collage, soudage ou insertion à force ;
- la tige de l'embout est tubulaire, et la queue d'insertion est reçue dans un alésage complémentaire de la tige tubulaire d'insertion ;
- une extrémité axiale longitudinale de la tige d'insertion est reçue dans un logement complémentaire du bouchon d'obturation ;
- ledit tronçon d'extrémité longitudinale du canal de circulation de liquide appartient à un tronçon d'extrémité longitudinale du dispositif de distribution réalisé à base d'au moins un matériau élastomère ou caoutchouc ;
- le canal de circulation de liquide appartient à un déflecteur aérodynamique du balai d'essuie-glace.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'un tronçon d'extrémité longitudinale d'un balai d'essuie-glace selon l'invention qui est coupé par un plan vertical et transversal ;
- la figure 2 est une vue en perspective du déflecteur aérodynamique du balai d'essuie-glace de la figure 1 ;
- la figure 3 est une vue en perspective de l'embout du balai d'essuie-glace de la figure 1 ;
- la figure 4 est une vue en perspective d'une portion supérieure de l'embout de la figure 3 qui est représenté en coupe par le plan horizontal 4-4 de la figure 3 ;
- la figure 5 est une vue en coupe par un plan horizontal correspondant au plan 4-4 de la figure 3, qui représente, avant leur assemblage, l'embout, le bouchon d'obturation sphérique et le tronçon d'extrémité longitudinale avant du déflecteur aérodynamique ;
- la figure 6 est une vue analogue à celle de la figure 5 qui illustre les trois composants de la figure 5 en position assemblée dans laquelle l'embout et le bouchon d'obturation assurent ensemble l'obturation du canal de circulation de liquide ;
- la figure 7 est une vue analogue à celle de la figure 5 qui illustre une première variante de conception de l'embout et du bouchon qui assurent ensemble l'obturation du canal de circulation de liquide ;
- la figure 8 est une vue analogue à celle de la figure 5 qui illustre une deuxième variante de conception de l'embout et du bouchon qui assurent ensemble l'obturation du canal de circulation de liquide.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative - et sans référence à la gravité terrestre - des orientations longitudinale, verticale et transversale indiquées par le trièdre "L,V,T" des figures. On définit aussi un plan horizontal qui s'étend longitudinalement et transversalement.

Par convention, l'axe longitudinal est orienté d'arrière vers l'avant et il s'étend globalement selon l'axe ou direction d'extension principale du balai d'essuie-glace.

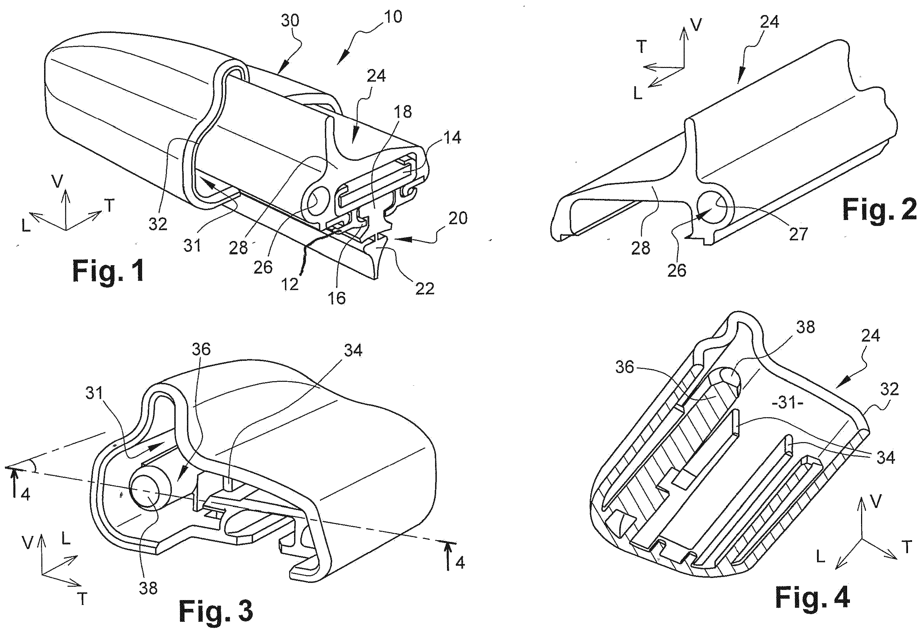

On a représenté à la figure 1 un balai d'essuie-glace 10 du type « Flat Blade » dont la structure comprend un support structurel longitudinal 12 qui est par exemple réalisé en matière plastique extrudée.

Le support 12 comporte une cavité qui s'étend sur toute sa longueur et qui loge une vertèbre, métallique ou en matière plastique, 14 de rigidification.

La vertèbre 14 se présente sous la forme d'une bande plate qui s'étend sensiblement dans le plan horizontal et sur toute la longueur du balai d'essuie-glace.

Le support structurel longitudinal 12 comporte aussi une griffe longitudinale 16 qui retient le talon supérieur 18 d'une lame d'essuyage 20 en matériau élastomère.

La lame d'essuyage 20 comporte une partie inférieure 22 qui est apte à coopérer avec une surface extérieure d'une vitre à essuyer et qui est reliée au talon supérieur 18 de manière articulée pour pouvoir pivoter dans les deux sens autour de l'axe longitudinal de l'ensemble.

On a aussi représenté à la figure 1 un accessoire 24 réalisé par extrusion indépendamment du support structurel longitudinal 12, qui est fixé sur ce dernier à sa partie supérieure et qui s'étend lui aussi sensiblement sur toute la longueur du balai d'essuie-glace.

L'accessoire 24 est un déflecteur aérodynamique, de conception générale connue qui comporte, agencé latéralement le long d'un de ces bords longitudinaux en partie inférieure, un canal 26 qui s'étend sur toute la longueur du déflecteur aérodynamique 24 pour permettre la circulation d'un liquide à l'intérieur de ce dernier.

Le canal 26 débouche librement aux deux extrémités du déflecteur aérodynamique 24 et notamment ici, comme on peut le voir à la figure 2, en face transversale et verticale d'extrémité libre avant 28 du déflecteur aérodynamique 24.

A titre non limitatif, le canal 26 est ici cylindrique à section de contour circulaire.

De manière connue et non visible sur les figures, le canal 26 est percé de trous ou de fentes réparties sur sa longueur afin par exemple de pouvoir projeter un liquide de lavage sur la vitre à essuyer.

L'essuie-glace comporte aussi un embout à chacune de ses extrémités longitudinales.

L'embout avant 30 illustré à la figure 1 est une pièce moulée en matière plastique rigide ou semi rigide qui se présente sous la forme d'une coque creuse globalement fermée et qui est délimitée longitudinalement vers l'arrière par un bord d'extrémité arrière 32 qui s'étend dans un plan vertical et transversal.

Le bord 32 de l'embout avant 30 délimite ainsi une face arrière ouverte permettant notamment l'introduction axiale, selon la direction longitudinale, de l'ensemble des autres composants 12, 14, 20 et 24, qui ont été préalablement assemblés, dans la cavité interne 31 de l'embout avant 30.

Alternativement, il est possible de pré-assembler un premier sous-ensemble comprenant l'embout avant 30 et le déflecteur aérodynamique 24, et de monter ce premier sous-ensemble sur un deuxième sous-ensemble comprenant le support structurel longitudinal 12, la vertèbre 14 et la lame d'essuyage 20.

À cet effet, l'embout avant 30 est conformé intérieurement de manière complémentaire du contour externe du profilé constituant le déflecteur aérodynamique 24.

L'embout avant 30 comporte préférablement deux butées 34 agencées intérieurement qui, en coopération avec une portion en vis-à-vis de la face transversale d'extrémité avant 28 du déflecteur aérodynamique 24 déterminent la position longitudinale relative de ce dernier par rapport à l'embout avant 30 en position montée et fixée des composants.

À l'intérieur de la cavité 31, l'embout avant 30 comporte aussi une tige 36 qui s'étend longitudinalement et qui est délimitée par une face transversale arrière 38 qui, comme on peut le voir notamment en figure 3 et suivantes, est légèrement décalée vers l'avant par rapport au plan transversal du bord arrière 32.

En position assemblée de l'ensemble des composants, la tige 36 est conçue pour être reçue axialement selon la direction longitudinale à l'intérieur d'un tronçon d'extrémité libre avant 27 du canal 26 qui débouche dans la face transversale d'extrémité avant 28.

Le diamètre externe du tronçon d'extrémité libre arrière de la tige 36 qui est apte à être reçu dans le tronçon d'extrémité libre avant 27 du canal 26 est supérieur au diamètre interne de ce dernier tronçon.

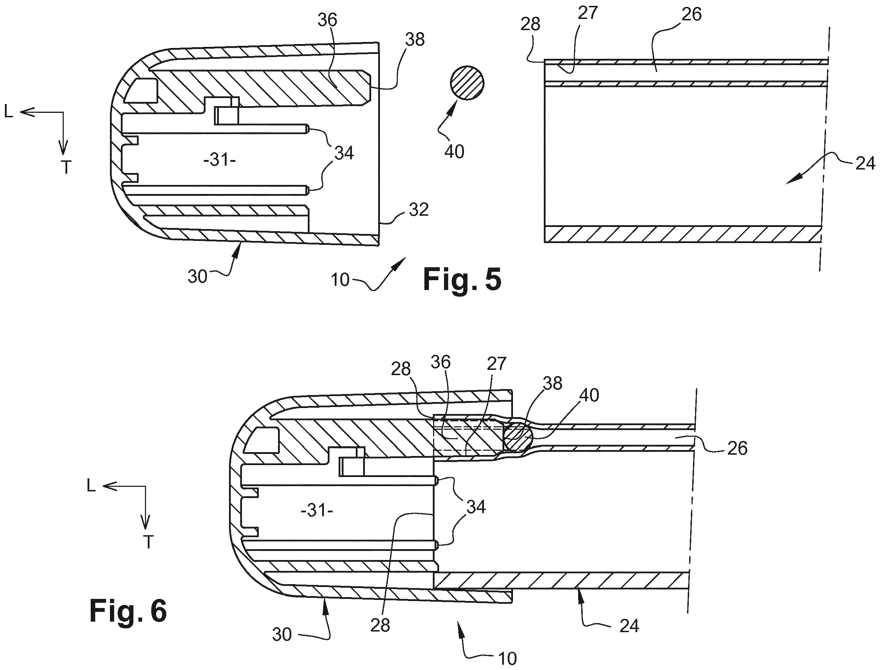

Du fait de cette différence dimensionnelle entre les diamètres et la longueur du tronçon d'extrémité libre arrière de la tige 36 qui est apte à être reçue dans le tronçon d'extrémité libre avant 27 du canal 26, la tige 36 est insérée axialement à force dans le canal 26 par déformation élastique du matériau constitutif ici du déflecteur aérodynamique 24 en provoquant une déformation radiale de ce dernier, tel qu'illustré notamment à la figure 6.

L'embout avant 30 assure ainsi une fermeture étanche au moins partielle de l'extrémité avant du canal 26 qui débouche dans la face transversale d'extrémité avant 28.

Conformément aux enseignements de l'invention, il est prévu un bouchon d'obturation 40 qui est un composant distinct de l'embout avant 30 de manière que ce dernier et le bouchon d'obturation 40 assurent ensemble la fermeture ou obturation la plus étanche possible de l'extrémité longitudinale avant du canal 26 de circulation de liquide.

Dans le mode de réalisation illustré aux figures 5 et 6, le bouchon d'obturation 40 est une bille sphérique dont le diamètre extérieur est supérieur au diamètre interne du tronçon d'extrémité libre avant 27 du canal 26 destiné à recevoir le bouchon d'obturation 40.

A titre non limitatif, la bille sphérique formant bouchon d'obturation 40 est par exemple en métal, de préférence inoxydable.

Pour un montage étanche, et du fait de la différence des diamètres, la bille sphérique formant bouchon d'obturation 40 est introduite axialement, de la gauche vers la droite en considérant la figure 5, par insertion à force et par déformation élastique du tronçon d'extrémité libre avant 27 du canal 26 jusque par exemple la position illustrée à la figure 6.

La mise en place à l'intérieur du canal 26 est effectuée, au moins en partie, avant le montage et la fixation de l'embout 30.

En fonction de la position axiale ou longitudinale qu'occupe alors le bouchon d'obturation 40 à l'intérieur du tronçon d'extrémité libre avant 27 du canal 26, et lors de l'introduction axiale de la tige 36 dans ce dernier, la face transversale d'extrémité arrière 38 de la tige 36 coopère dans cet exemple avec la paroi sphérique convexe du bouchon d'obturation 40 pour « pousser » axialement ce dernier plus loin à l'intérieur du tronçon d'extrémité libre avant 27 du canal 26.

A titre non limitatif, et pour améliorer encore la qualité de l'étanchéité et la tenue du tronçon d'extrémité libre arrière de la tige 36 de l'embout avant 30 à l'intérieur du tronçon d'extrémité libre avant 27 du canal 26, on peut prévoir un collage ou un soudage complémentaire entre ces éléments.

En variante, le soudage et/ou le collage remplace ou complète l'insertion axiale à force par déformation élastique et assure l'étanchéité et la tenue axiale du tronçon d'extrémité libre arrière de la tige 36 à l'intérieur du tronçon d'extrémité libre avant 27 du canal 26.

En position assemblée, et du fait de la déformation élastique de la paroi latérale, et de la déformation du déflecteur vers l'intérieur de la structure, ici sur une demi-circonférence, du déflecteur aérodynamique 24 au droit de la bille sphérique insérée dans le canal 26 pour former un bouchon d'obturation, un renflement localisé peut être visible depuis l'extérieur.

Un tel renflement peut, pour tout ou partie être masqué par la paroi latérale de l'embout avant 30 et la longueur axiale de cette dernière peut être adaptée à cet effet.

D'une manière générale, le principe selon l'invention consistant à combiner les effets d'obturation étanche résultant de la tige 36 avec un composant supplémentaire distinct conduisent à une série de conceptions possibles du bouchon d'obturation selon lesquelles, de préférence, le bouchon d'obturation comporte au moins un corps d'obturation dont la section transversale est conjuguée de celle du tronçon d'extrémité libre dudit canal, et notamment un corps d'obturation 40 de révolution.

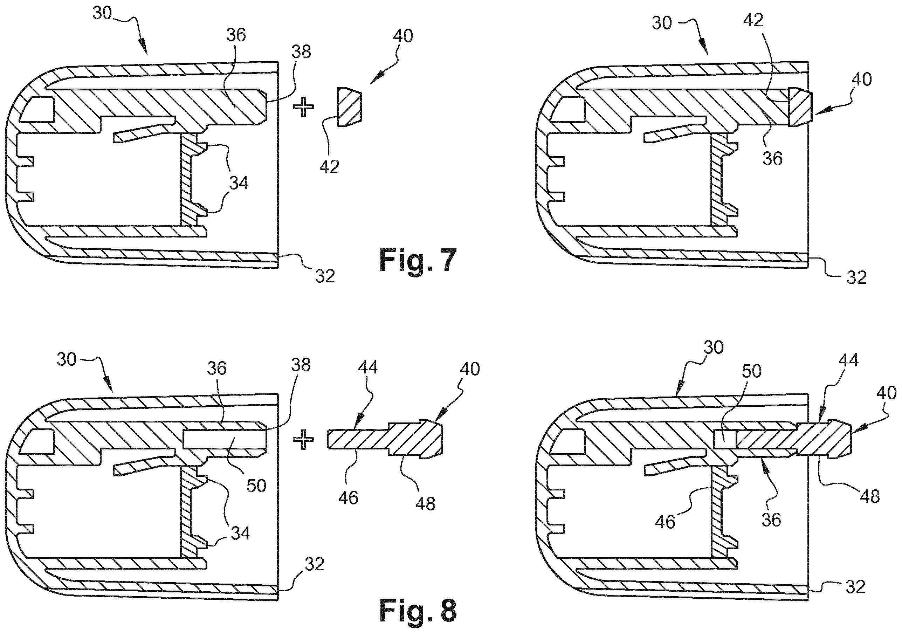

Selon une première variante de conception illustrée schématiquement à la figure 7, le bouchon d'obturation 40 se présente sous la forme d'un tronc de cône dont au moins la partie avant (A gauche en considérant la figure 7, le bouchon d'obturation 40 est d'un diamètre externe du même ordre de dimension que celui de la bille sphérique, de manière à garantir son insertion axiale à force dans le tronçon d'extrémité libre avant 27 du canal 26 du déflecteur 24.

Pour faciliter son montage par insertion axiale, son extrémité arrière de plus petit diamètre est de préférence orientée en direction de l'extrémité libre débouchante du canal 26.

Pour déterminer cette orientation et faciliter les opérations de montage, le bouchon d'obturation tronconique 40 présente dans sa face avant 42 un logement (non représenté) qui peut recevoir l'extrémité libre de la tige 36 sur laquelle il est alors pré-positionné comme illustré à la partie gauche de la figure 7.

La tige 36 fait ainsi fonction de support du bouchon d'obturation 40.

Le maintien du bouchon d'obturation 40 sur l'extrémité libre arrière de la tige 36 peut être temporaire et assuré par frottement, ou permanent par exemple par collage ou par soudage.

Selon une deuxième variante illustrée à la figure 8, le corps d'obturation du bouchon d'obturation est à nouveau tronconique comme ce qui vient d'être expliqué en référence à la figure 7.

Pour assurer son support par l'embout avant 30, le corps d'obturation se prolonge axialement vers l'avant par une tige étagée 44 dont le tronçon d'extrémité libre avant 46 est reçu axialement dans un alésage complémentaire 50 de la tige 36 qui, à cet effet, est de conception tubulaire.

L'épaulement radial qui délimite le tronçon avant 46 de plus petit diamètre par rapport au tronçon arrière 48 de plus grand diamètre, coopère avec la face transversale annulaire d'extrémité de la tige 36 pour déterminer la position axiale du corps d'obturation par rapport à l'embout avant 30, et donc après assemblage, à l'intérieur du canal 26.

A titres de variantes non représentées, l'invention n'est pas limitée à un canal unique formé dans un déflecteur aérodynamique.

Le déflecteur aérodynamique peut par exemple comporter deux canaux latéraux parallèles.

Le canal n'est pas nécessairement latéral, il peut aussi être formé à l'intérieur de la partie centrale formant corps du déflecteur aérodynamique.

De plus, l'accessoire tel qu'un déflecteur aérodynamique n'est pas nécessairement en une seule pièce s'étendant sur toute la longueur du balai d'essuie-glace.

L'invention n'est pas non plus limitée à un balai d'essuie-glace du type « Flat Blade », la structure destinée à supporter la lame d'essuyage pouvant être une structure articulée, telle qu'une structure à étriers.

## Revendications

1. Balai (10) d'essuie-glace comprenant un dispositif de distribution et/ou de projection de liquide comportant :
- au moins un canal (26) de circulation de liquide dont une extrémité longitudinale (27) débouche dans une face d'extrémité (28) du dispositif (24) ;
- un bouchon (40) d'obturation de ladite extrémité longitudinale (27) du canal (26) de circulation de liquide qui est inséré à l'intérieur d'un tronçon d'extrémité longitudinale (27) dudit canal (26) ;
- et un embout (30) agencé en vis-à-vis de ladite face d'extrémité (28) du dispositif (24),
le bouchon (40) d'obturation étant un composant distinct de l'embout (30), de manière que l'embout (30) et le bouchon (40) assurent ensemble l'obturation de ladite extrémité longitudinale (27) du canal (26) de circulation de liquide, **caractérisé en ce que** l'embout (30) comporte une tige (36) qui est reçue à l'intérieur dudit tronçon d'extrémité longitudinale (27) dudit canal (26).

2. Balai (10) d'essuie-glace selon la revendication 1, **caractérisé en ce que** le bouchon (40) d'obturation comporte au moins un corps d'obturation dont la section transversale est conjuguée de celle du tronçon d'extrémité libre (27) dudit canal (26).

3. Balai (10) d'essuie-glace selon la revendication 1, **caractérisé en ce que** le bouchon (40) comporte un corps d'obturation de révolution, et **en ce que** la section transversale du tronçon d'extrémité longitudinale (27) du canal (26) de circulation de liquide est circulaire.

4. Balai (10) d'essuie-glace selon la revendication 3, **caractérisé en ce que** le corps d'obturation du bouchon (40) d'obturation est un corps sphérique.

5. Balai (10) d'essuie-glace selon la revendication 3, **caractérisé en ce que** le corps d'obturation du bouchon (40) d'obturation est un tronçon de sphère, de cône, ou de cylindre.

6. Balai (10) d'essuie-glace selon l'une quelconque des revendications 2 à 5, **caractérisé en ce que** le bouchon (40) d'obturation comporte une queue (44) d'insertion qui prolonge axialement le corps d'obturation.

7. Balai (10) d'essuie-glace selon l'une quelconque des revendications précédentes, **caractérisé en ce que** le bouchon (40) d'obturation de ladite extrémité du canal (26) de circulation de liquide est inséré axialement à l'intérieur dudit tronçon d'extrémité longitudinale (27) dudit canal (26).

8. Balai (10) d'essuie-glace selon l'une des revendications précédentes, **caractérisé en ce que** la tige (36) est fixée à l'intérieur dudit tronçon d'extrémité longitudinale (27) du canal (26) de circulation de liquide, par collage, soudage ou insertion à force.

9. Balai (10) d'essuie-glace selon la revendication 8 prise en combinaison avec la revendication 6, **caractérisé en ce que** la tige (36) de l'embout (30) est tubulaire, et **en ce que** la queue (44) d'insertion est reçue dans un alésage complémentaire (50) de la tige (36) tubulaire d'insertion.

## Patentansprüche

1. Scheibenwischerblatt (10), umfassend eine Flüssigkeitsverteilungs- und/oder Flüssigkeitsausstoßvorrichtung mit:
- mindestens einem Kanal (26) zur Zirkulation von Flüssigkeit, dessen eines Längsende (27) in eine Endfläche (28) der Vorrichtung (24) mündet;
- einem Stopfen (40) zum Verschließen des Längsendes (27) des Flüssigkeitszirkulationskanals (26), der in das Innere eines Längsendabschnitts (27) des Kanals (26) eingesteckt ist;
- und einem Mundstück (30), das gegenüber der Endfläche (28) der Vorrichtung (24) angeordnet ist, wobei der Verschlussstopfen (40) eine vom Mundstück (30) getrennte Komponente ist, sodass das Mundstück (30) und der Stopfen (40) zusammen den Verschluss des Längsendes (27) des Flüssigkeitszirkulationskanals (26) gewährleisten, **dadurch gekennzeichnet, dass** das Mundstück (30) einen Schaft (36) aufweist, der im Inneren des Längsendabschnitts (27) des Kanals (26) aufgenommen ist.

2. Scheibenwischerblatt (10) nach Anspruch 1, **dadurch gekennzeichnet, dass** der Verschlussstopfen (40) mindestens einen Verschlusskörper aufweist, dessen Querschnitt an den des freien Endabschnitts (27) des Kanals (26) angepasst ist.

3. Scheibenwischerblatt (10) nach Anspruch 1, **dadurch gekennzeichnet, dass** der Stopfen (40) einen Rotationsverschlusskörper aufweist und dass der Querschnitt des Längsendabschnitts (27) des Flüssigkeitszirkulationskanals (26) kreisförmig ist.

4. Scheibenwischerblatt (10) nach Anspruch 3, **dadurch gekennzeichnet, dass** der Verschlusskörper des Verschlussstopfens (40) ein kugelförmiger Körper ist.

5. Scheibenwischerblatt (10) nach Anspruch 3, **dadurch gekennzeichnet, dass** der Verschlusskörper des Verschlussstopfens (40) ein Abschnitt einer Kugel, eines Kegels oder eines Zylinders ist.

6. Scheibenwischerblatt (10) nach einem der Ansprüche 2 bis 5, **dadurch gekennzeichnet, dass** der Verschlussstopfen (40) einen Einsteckschaft (44) aufweist, der den Verschlusskörper axial verlängert.

7. Scheibenwischerblatt (10) nach einem der vorangehenden Ansprüche, **dadurch gekennzeichnet, dass** der Verschlussstopfen (40) des Endes des Flüssigkeitszirkulationskanals (26) axial in das Innere des Längsendabschnitts (27) des Kanals (26) eingesteckt ist.

8. Scheibenwischerblatt (10) nach einem der vorangehenden Ansprüche, **dadurch gekennzeichnet, dass** der Schaft (36) durch Kleben, Schweißen oder Einpressen im Inneren des Längsendabschnitts (27) des Flüssigkeitszirkulationskanals (26) befestigt ist.

9. Scheibenwischerblatt (10) nach Anspruch 8 in Verbindung mit Anspruch 6, **dadurch gekennzeichnet, dass** der Schaft (36) des Mundstücks (30) rohrförmig ist und dass der Einsteckschaft (44) in einer komplementären Bohrung (50) des rohrförmigen Einsteckschafts (36) aufgenommen ist.

## Claims

1. A wiper frame (10) comprising a liquid distributing and/or spraying device comprising:
- at least one liquid circulation duct (26) of which one longitudinal end (27) opens into an end face (28) of the device (24);
- a plug (40) for plugging said longitudinal end (27) of the liquid circulation duct (26) and which is inserted into a longitudinal end portion (27) of said duct (26);
- and an endpiece (30) arranged facing said end face (28) of the device (24),
the plug (40) being a component distinct from the endpiece (30), so that the endpiece (30) and the plug (40) together plug said longitudinal end (27) of the liquid circulation duct (26), **characterized in that** the endpiece (30) comprises a stem (36) which is received inside said longitudinal end portion (27) of said duct (26).

2. The wiper frame (10) as claimed in claim 1, **characterized in that** the plug (40) comprises at least a plugging body of which the transverse cross section is the mate of that of the free end portion (27) of said duct (26).

3. The wiper frame (10) as claimed in claim 1, **characterized in that** the plug (40) comprises a plugging body exhibiting symmetry of revolution, and **in that** the transverse cross section of the longitudinal end portion (27) of the liquid circulation duct (26) is circular.

4. The wiper frame (10) as claimed in claim 3, **characterized in that** the plugging body of the plug (40) is a spherical body.

5. The wiper frame (10) as claimed in claim 3, **characterized in that** the plugging body of the plug (40) is a portion of a sphere, of a cone, or of a cylinder.

6. The wiper frame (10) as claimed in any one of claims 2 to 5, **characterized in that** the plug (40) comprises an insertion shank (44) which axially extends the plugging body.

7. The wiper frame (10) as claimed in any one of the preceding claims, **characterized in that** the plug (40) for plugging said end of the liquid circulation duct (26) is inserted axially into said longitudinal end portion (27) of said duct (26).

8. The wiper frame (10) as claimed in any one of the preceding claims, **characterized in that** the stem (36) is fixed inside said longitudinal end portion (27) of the liquid circulation duct (26) by bonding, welding or force-fitting.

9. The wiper frame (10) as claimed in claim 8 considered in combination with claim 6, **characterized in that** the stem (36) of the endpiece (30) is tubular, and **in that** the insertion shank (44) is housed in a complementary bore (50) of the tubular insertion stem (36).
